# EUROPEAN PATENT APPLICATION

(11) **EP 1 876 487 A1**
(43) Date of publication of application: **09.01.2008**
(21) Application number: 07252684.1
(22) Date of filing: 04.07.2007
(51) Int. Cl.: G02B 27/14

(54) **Projection system**

(30) Priority: 04.07.2006 KR 20060062465
(71) Applicant: LG Electronics Inc., Seoul, 150-721 (KR)
(72) Inventor: Yoon, Chan Young, c/o LG Electronics Inc. IP Group, Seoul 137-724 (KR); Chung, Ji Hyouk, c/o LG Electronics Inc. IP Group, Seoul 137-724 (KR)
(74) Representative: Camp, Ronald

(57) **Abstract**

A projection system in which color purity can be improved and color reproductive area can be expanded, includes a light source to emit red light, green light, and blue light; a combining unit to selectively transmit or reflect the red light, the green light, and the blue light, emitted from the light source to combine the red light, the green light, and the blue light; an integrator into which the combined light enters; an illumination lens to focus the light passing through the integrator; a panel into which the light passing through the illumination lens enters; a prism disposed between the illumination lens and the panel to adjust an optical path; and a projection lens to focus the light passing through the prism. The light sources may alternatively be yellow, cyan and magenta.

## Description

### BACKGROUND OF THE INVENTION

### Field of the Invention

The present invention relates to a projection system. It more particularly relates to a projection system in which color purity can be improved and a color reproductive area can be expanded.

### Discussion of the Related Art

Recently, a big-sized high-definition display has become one of the most important issues, and there are direct-view liquid crystal displays (LCD), plasma display panels (PDP), projection TVs, projectors, and the like, as typical big-sized displays developed and commonly used up to now.

Among them, the projection TV and the projector commonly include an optical engine, and the optical engine employs a display device to display signal-processed image information, such as a cathode ray tube (CRT), an LCD, a digital micro-mirror device (DMD), and the like.

A projector using the LCD can be grouped into a system using a transmissive LCD and a system using a reflective LCD (LCoS).

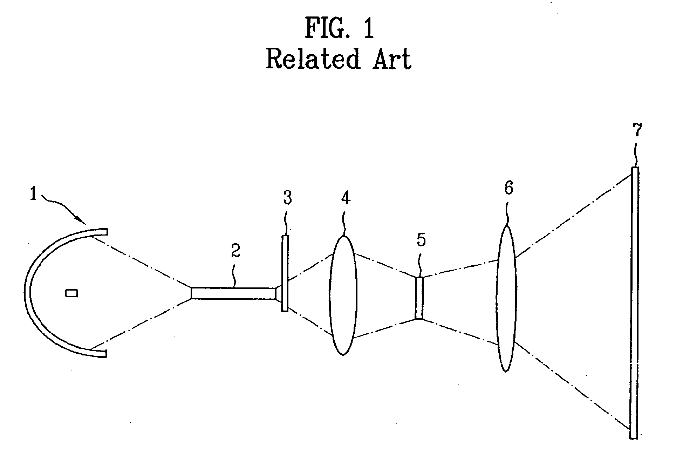

FIG. 1 illustrates an example of a transmissive single panel projection optical system including a lamp 1, a color wheel 3, an integrator 2, an illumination lens 4, a panel 5, a projection lens 6, and a screen 7.

The lamp 1 is a light source to generate a white light, and the color wheel 3 sequentially divides a red light, a green light, and a blue light from the light source, i.e., the lamp 1.

In this case, the integrator 2 is disposed between the lamp 1 and the color wheel 3 and is used to make the light emitted from the lamp 1 have a uniform luminance and a desired shape.

Moreover, the illumination lens 4 illuminates the light outputted from the integrator 2 to the panel 5, the panel 5 receives image information created from the light of the lamp 1 by the color wheel 3, and the image information is formed on the screen 7 by the projection lens 6.

### SUMMARY OF THE INVENTION

Accordingly, the present invention is directed to a projection system that seeks to substantially obviate one or more problems due to limitations and disadvantages of the related art.

Embodiments of the present invention can provide a projection system arranged to easily combine light using a light emitting device light source so as to increase a color purity, to be easily manufactured, and to decrease a size of entire projection system.

Additional advantages and features of the invention will be set forth in part in the description which follows and in part will become apparent to those having ordinary skill in the art upon examination of the following or may be learned from practice of the invention. Other advantages of the invention may be realized and attained by the structure particularly pointed out in the written description and claims hereof as well as the appended drawings.

An aspect of the invention provides a projection system comprising: a light source to emit a red light, a green light, and a blue light; a combining unit to selectively transmit or reflect the red light, the green light, and the blue light, emitted from the light source to combine the red light, the green light, and the blue light; an integrator into which the combined light enters; an illumination lens to focus the light passing through the integrator; a panel into which the light passing through the illumination lens enters; a prism disposed between the illumination lens and the panel to adjust an optical path; and a projection lens to focus the light passing through the prism.

Another aspect of the invention provides a projection system comprising: a light source to emit a red light, a green light, and a blue light; a first optical device to transmit the red light emitted from the light source and to reflect the green light; and a second optical device to transmit the red light and the green light emitted from the light source and to reflect the blue light.

Another aspect of the invention provides a projection system comprising: a light source to emit a red light, a green light, and a blue light; a third optical device to transmit the green light emitted from the light source and to reflect the red light; and a fourth optical device to transmit the red light and the green light emitted from the light source and to reflect the blue light.

Another aspect of the invention provides a projection system comprising: a light source to emit a first color light, a second color light, and a third color light which are combined into a white light; and a combining unit to selectively transmit and reflect the first color light, the second color light, and the third color light, emitted from the light source to combine the same into the white light.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 illustrates an example of a conventional transmissive single panel projection optical system;

FIG. 2 is a schematic view illustrating a projection system according to an embodiment of the present invention;

FIG. 3 is a graph illustrating light transmission of a first dichroic mirror employed in the projection system according to the embodiment of the present invention;

FIG. 4 is a graph illustrating light transmission of a second dichroic mirror employed in the projection system according to the embodiment of the present invention;

FIG. 5 is a schematic view illustrating a projection system according to another embodiment of the present invention; and

FIG. 6 is a graph illustrating light transmission of a third dichroic mirror employed in the projection system according to the embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Hereinafter, a projection system according to the preferred embodiment of the present invention will be described in detail with reference to the accompanying drawings.

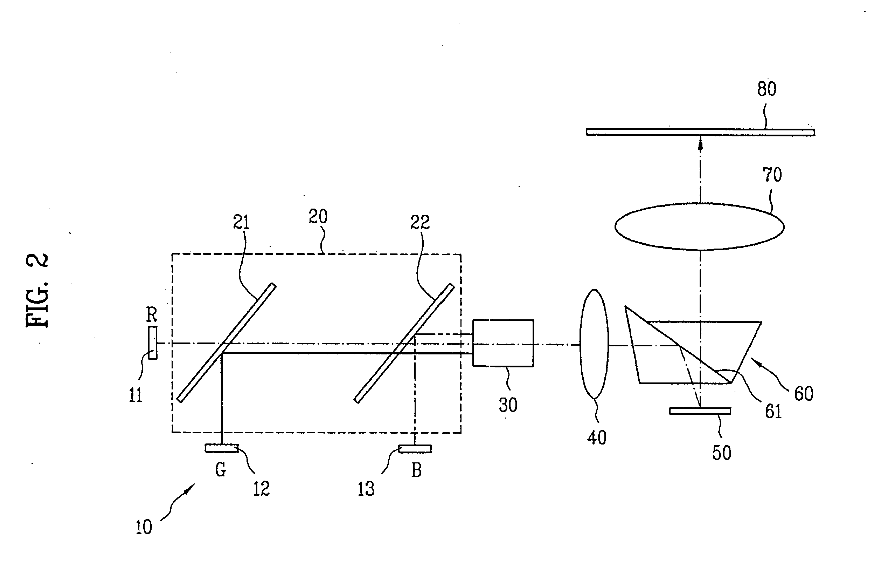

As illustrated in FIG. 2, light passing through a light source 10 is combined in a combining unit 20 including two dichroic mirrors 21 and 22.

The light source 10 may employ respective light sources to independently emit red light, green light, and blue light, or a semiconductor light emitting device may be also used as the light source.

In this exemplary embodiment of the present invention, the light source 10 employs light emitting diode (LED), one of the semiconductor light emitting devices is used, and the light source 10 includes a red LED 11, a green LED 12, and a blue LED 13.

Moreover, the light source 10 may employ a laser light source to emit red light, green light, and blue light other than the LED, and a laser diode is preferably used as the laser light source.

As described above, in the light source 10 including the LEDs 11, 12, and 13 to emit light of the three primary color, the three primary color lights of the LEDs 11, 12, and 13 are combined so that light having a white light color can be outputted.

On the other hand, it is possible to have another combination of the light source 10 to emit colored lights different from the three primary colored lights to be combined to form the whim light. For example, it is possible to use a light source 10 to emit light of cyan, magenta, and yellow colors.

This light source 10, as illustrated in FIG. 2, is arranged such that lights are combined by the two dichroic mirrors 21 and 22.

The dichroic mirrors 21 and 22 are respective mirrors to selectively reflect and transmit a light of a specific wavelength to obtain lights of specific wavelengths, and are usually devices using interference of lights.

Moreover, the dichroic mirrors are easily fabricated and manufacturing costs of the projection system can be reduced using the dichroic mirrors.

The dichroic mirrors 21 and 22, as illustrated in FIG. 2, may combine the white light by which the first dichroic mirror 21 is disposed at a position where light emitted from the red LED 11 intersects light emitted from the green LED 12, and the second dichroic mirror 22 is disposed at a position where the light emitted from the red LED 11 intersects light emitted from the blue LED 13.

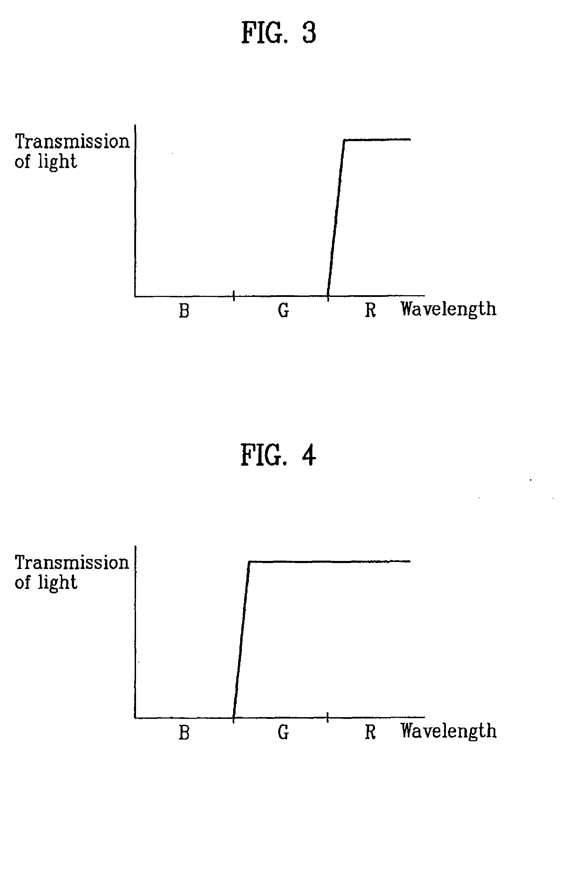

In this case, the first dichroic mirror 21, as illustrated in FIG. 3, may transmit the red light R and may reflect the green light G.

Moreover, as illustrated in FIG. 3, it is preferred that the blue light B is not transmitted through but is reflected by the first dichroic mirror 21.

On the other hand, the second dichroic mirror 22, in the state as illustrated in FIG. 4, transmits the green light G and reflects the blue light B.

Thus, as illustrated in FIG. 2, the red light R passes through both the first dichroic mirror 21 and the second dichroic mirror 22, the green light G is reflected by the first dichroic mirror 21 be directed to an integrator 30 and passes through the second dichroic mirror 22.

Moreover, the blue light B is reflected by the second dichroic mirror 22 and is directed to the integrator 30.

As such, the red light R, the green light G, and the blue light B pass through the two dichroic mirrors 21 and 22 to be combined into various color lights in accordance with an image to be formed.

The light emitted from the light source 10 has a uniform illuminance while the output light combined in the above-described process passes through the integrator 30. Moreover, the light emitted from the light source 10 may be shaped in a desired shape during the transmission through the integrator 30.

The integrator 30 may be implemented by a rod-type rod lens or a box-shaped optical tunnel.

As such, the outputted light, which is changed to have a uniform illuminance and is shaped in the desired shape in the integrator 30, is focused by an illumination lens 40, and the light passing through the illumination lens 40 enters a prism 60 to be supplied to a panel 50.

In this case, since the prism 60 has an interface, the light transmitted from the illumination lens 40 is primarily reflected by a surface 61 of the prism 60 and enters the panel 50. However, the light emitted from the panel 50 passes through the prism 60 and is transmitted to a projection lens 70.

When the light emitted from the light source 10 arrives at the panel 50, the panel 50 outputs image information for the projection of the light by proper switching operations and reflection and the light is focused to form an image on a screen 80 according to the image information.

As the panel 50, in this exemplary non-limiting embodiment any one of a digital micro-mirror device (DMD), a liquid crystal on silicon (LCoS), and a liquid crystal device (LCD) may be used. The panel 50 may be referred to as a micro-switching device.

In this embodiment the projection lens 70 magnifies the image outputted from the panel 50 by approximately 80 to 130 times and transmits the magnified image to the screen 80.

As described above, the projection system is configured by a dichroic mirror to reflect the blue light B and a dichroic mirror to reflect the red light R.

One of reasons why the projection system is configured as described above is because there may be a restriction of implementing the projection system due to a limit of light transmission of the blue light transmission dichroic mirror to be fabricated at wavelengths of the blue light B.

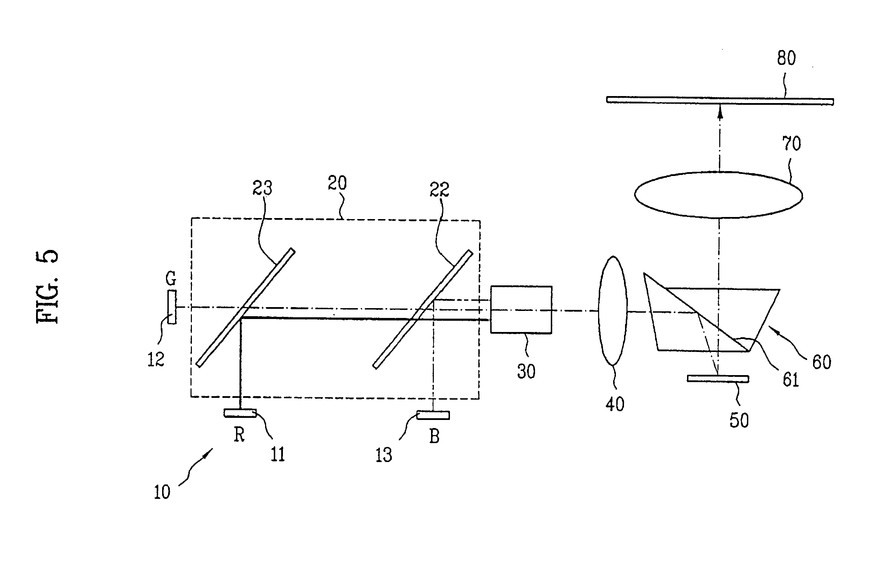

On the other hand, as illustrated in FIG. 5, the projection system may be configured by which the green LED 12 is approximately aligned with the integrator 30 such that the light emitted from the green LED 12 passes through the two dichroic mirrors 23 and 22 and enters the integrator 30.

In this case, the light emitted from the red LED 11 is reflected by a third dichroic mirror 23 to transmit the green light G and to reflect the red light R and is outputted.

As described above, the light emitted from the green LED 12 passes through the third dichroic mirror 23 as it is.

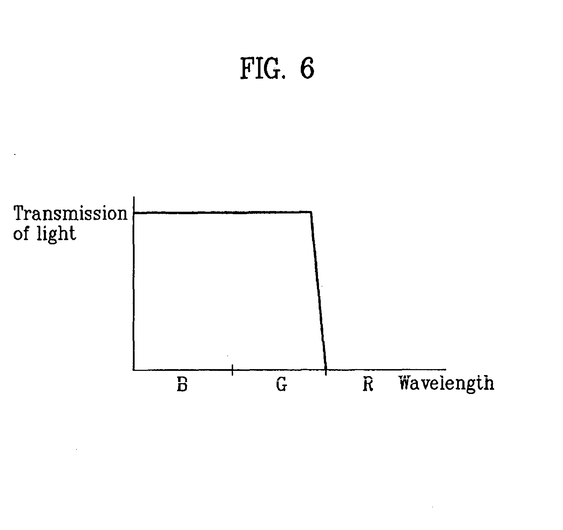

This third dichroic mirror 23, as illustrated in the graph of FIG. 6, may be configured to transmit the green light G as well as the blue light B.

However, since the blue light B is not transmitted by the third dichroic mirror 23, the light transmission of the third dichroic mirror 23 to be fabricated at wavelengths of the blue light B does not matter.

On the other hand, the light emitted from the blue LED 13 is reflected by the second dichroic mirror 22 and enters the integrator 30.

As such, the red light R, the green light G, and the blue light B pass through the two dichroic mirrors 23 and 22 to be combined into various color lights according to an image to be formed.

As described above, the light which enters the integrator 30 becomes focused on the screen 80 via the illumination lens 40, the prism 60, the panel 50, and the projection lens 70, and this process is identical to the process illustrated in FIG. 2.

As such, since the projection system is implemented by the red light source, the green light source, the blue light source, and the dichroic mirrors, the color purity is enhanced and the color reproduction range is expanded to enable to display the high-quality image.

Moreover, since the projection system does not employ a color wheel, noise does not occur.

Furthermore, due to this configuration of the projection system, the size of the entire projection system can be reduced and the manufacturing costs can be decreased.

It will be apparent to those skilled in the art that various modifications and variations can be made in the present invention without departing from the scope of the inventions. Thus, it is intended that the present invention covers the modifications and variations of this invention provided they come within the scope of the appended claims.

## Claims

1. A projection system comprising:
a light source to emit a red light, a green light, and a blue light;
a combining unit to selectively transmit or reflect the red light, the green light, and the blue light, emitted from the light source to combine the red light, the green light, and the blue light;
an integrator into which the combined light enters;
an illumination lens to focus the light passing through the integrator;
a panel into which the light passing through the illumination lens enters;
a prism disposed between the illumination lens and the panel to adjust an optical path; and
a projection lens to focus the light passing through the prism.

2. The projection system according to claim 1, wherein the combining unit comprises:
a first dichroic mirror to transmit the red light emitted from the light source and to reflect the green light; and
a second dichroic mirror to transmit the red light and the green light, emitted from the light source, and to reflect the blue light.

3. The projection system according to claim 2, wherein the first dichroic mirror is disposed at a position where the red light emitted from the light source intersects the green light.

4. The projection system according to claim 2, wherein the second dichroic mirror is disposed at a position where the red light emitted from the light source intersects the blue light.

5. The projection system according to claim 2, wherein the light source is installed such that the red light is aligned with the integrator.

6. The projection system according to claim 2, wherein the red light emitted from the light source passes through the first dichroic mirror and the second dichroic mirror, the green light is reflected by the first dichroic mirror and passes through the second dichroic mirror, and the blue light is reflected by the second dichroic mirror.

7. The projection system according to claim 1, wherein the combining unit comprises:
a third dichroic mirror to transmit the green light emitted from the light source and to reflect the red light; and
a second dichroic mirror to transmit the red light and the green light emitted from the light source and to reflect the blue light.

8. The projection system according to claim 7, wherein the third dichroic mirror is disposed at a position where the red light emitted from the light source intersects the green light.

9. The projection system according to claim 7, wherein the second dichroic mirror is disposed at a position where the red light emitted from the light source intersects the blue light.

10. The projection system according to claim 7, wherein the light source is installed such that the green light is aligned with the integrator.

11. The projection system according to claim 7, wherein the green light emitted from the light source passes through the third dichroic mirror and the second dichroic mirror, the red light is reflected by the third dichroic mirror and passes through the second dichroic mirror, and the blue light is reflected by the second dichroic mirror.

12. The projection system according to claim 1, wherein the panel comprises one of a group of a digital micro-mirror device (DMD), a liquid crystal on silicon (LCoS), and a liquid crystal device (LCD).

13. The projection system according to claim 1, wherein the integrator comprises a rod lens or an optical tunnel.

14. The projection system according to claim 1, wherein the light source employs a semiconductor light emitting device.

15. The projection system according to claim 1, wherein the light source comprises a light emitting diode or a laser diode.

16. A projection system comprising:
a light source to emit a red light, a green light, and a blue light;
a first optical device to transmit the red light emitted from the light source and to reflect the green light; and
a second optical device to transmit the red light and the green light emitted from the light source and to reflect the blue light.

17. The projection system according to claim 16, wherein the first optical device and the second optical device comprise dichroic mirrors.

18. The projection system according to claim 16, wherein the light source comprises a semiconductor light emitting device.

19. A projection system comprising:
a light source to emit a red light, a green light, and a blue light;
a third optical device to transmit the green light emitted from the light source and to reflect the red light; and
a fourth optical device to transmit the red light and the green light emitted from the light source and to reflect the blue light.

20. A projection system comprising:
a light source to emit a first color light, a second color light, and a third color light which are combined into a white light; and
a combining unit to selectively transmit and reflect the first color light, the second color light, and the third color light, emitted from the light source to combine the same into the white light.
